# EUROPEAN PATENT APPLICATION

(11) **EP 4 718 823 A1**
(43) Date of publication of application: **01.04.2026**
(21) Application number: 24825115.9
(22) Date of filing: 28.05.2024
(51) Int. Cl.: H04L 67/63, H04W 76/12

(54) **MESSAGE MANAGEMENT AND CONTROL METHOD, APPARATUS AND SYSTEM**

(30) Priority: 19.06.2023 CN 202310731435; 31.07.2023 CN 202310953518
(71) Applicant: Huawei Technologies Co., Ltd., Shenzhen, Guangdong 518129 (CN)
(72) Inventor: XU, Yongfan, Shenzhen, Guangdong 518129 (CN); HU, Xiaozheng, Shenzhen, Guangdong 518129 (CN); PENG, Shuping, Shenzhen, Guangdong 518129 (CN); ZHU, Xiaoping, Shenzhen, Guangdong 518129 (CN); ZHOU, Min, Shenzhen, Guangdong 518129 (CN)
(74) Representative: Pfenning, Meinig & Partner mbB
(86) International application number: PCT/CN2024/095665
(87) International publication number: WO 2024/260219

(57) **Abstract**

A packet management and control method, apparatus, and system are provided, and belong to the field of network technologies. The method includes: A first device obtains a packet including an identifier of an application deployed in a container. The first device manages and controls the packet based on the identifier of the application. This application manages and controls the packet of the container based on the identifier of the application deployed in the container, thus making the management and control for the packet of the container easier.

## Description

This application claims priorities to Chinese Patent Application No. 202310731435.2, filed on June 19, 2023 and entitled "NETWORK MANAGEMENT METHOD AND APPARATUS", and to Chinese Patent Application No. 202310953518.6, filed on July 31, 2023 and entitled "PACKET MANAGEMENT AND CONTROL METHOD, APPARATUS, AND SYSTEM", both of which are incorporated herein by reference in their entireties.

### TECHNICAL FIELD

This application relates to the field of communication technologies, and in particular, to a packet management and control method, apparatus, and system.

### BACKGROUND

With development of virtualisation technologies, applications may be deployed in containers (containers), to implement isolation of resources of different applications (applications, Apps) by using the containers. An internet protocol (internet protocol, IP) address of a container dynamically changes with going online, going offline, migration, or the like of the container. Currently, a packet of a container is typically managed and controlled based on an IP address of the container carried in the packet of the container. However, because the IP address of the container dynamically changes, it is difficult to manage and control the packet of the container based on the IP address of the container.

### SUMMARY

This application provides a packet management and control method, apparatus, and system, to help reduce packet management and control difficulty. Technical solutions of this application are as follows.

According to a first aspect, a packet management and control method is provided. The method includes: A first device obtains a packet including an identifier of an application deployed in a container. The first device manages and controls the packet based on the identifier of the application. The packet is a packet of the container. For example, the packet is a data packet of the application deployed in the container, and the packet includes data of the application.

According to the technical solutions provided in this application, the identifier of the application deployed in the container is carried in the packet of the container, and the packet of the container is managed and controlled based on the identifier of the application deployed in the container. Because the identifier of the application deployed in the container does not dynamically change with going online, going offline, migration, or the like of the container, in the technical solutions provided in this application, difficulty of managing and controlling the packet of the container is low.

Optionally, the packet is an internet protocol version 6 (internet protocol version 6, IPv6) packet, the packet includes an application-aware networking (application-aware networking, APN) header, and the APN header includes the identifier of the application; or
the packet is an internet protocol version 4 (internet protocol version 4, IPv4) packet or an IPv6 packet, the packet includes a transmission control protocol (transmission control protocol, TCP) header, and the TCP header includes the identifier of the application.

Optionally, the packet is the IPv6 packet, the packet includes the APN header, the APN header includes an APN identification (APN identification, APN ID) field, and the APN ID field includes the identifier of the application; or the packet is the IPv4 packet or the IPv6 packet, the packet includes the TCP header, the TCP header includes an option (option) field, and the option field includes the identifier of the application.

Optionally, that the first device manages and controls the packet based on the identifier of the application includes: The first device determines a management and control policy of the packet based on the identifier of the application. The first device forwards or discards the packet according to the management and control policy. The management and control policy indicates to forward or discard the packet. The management and control policy may be a correspondence between the identifier of the application and a management and control operation. The management and control operation includes forwarding or discarding.

Optionally, the first device is a device on which the container is deployed, and that the first device obtains the packet includes: The first device obtains the identifier of the application. The first device generates the packet based on the identifier of the application. For example, the first device generates the IPv6 packet, where the IPv6 packet includes the APN header including the identifier of the application. For another example, the first device generates the IPv6 packet, where the IPv6 packet includes the TCP header including the identifier of the application. For still another example, the first device generates the IPv4 packet, where the IPv4 packet includes the TCP header including the identifier of the application.

Optionally, that the first device obtains the identifier of the application includes: The first device obtains a correspondence between an identifier of the container and the identifier of the application. The first device obtains the identifier of the application based on the identifier of the container and the correspondence.

Optionally, that the first device obtains the correspondence between the identifier of the container and the identifier of the application includes: The first device receives the correspondence from a management and control device, where the correspondence is generated by the management and control device based on the identifier of the container and the identifier of the application. For example, the management and control device is a container management platform, and the identifier of the container and the identifier of the application are generated by the management and control device when the container goes online. The management and control device may send the correspondence to the first device through a representative state transfer (representational state transfer, Restful) interface.

Optionally, that the first device obtains the correspondence between the identifier of the container and the identifier of the application includes: The first device generates the correspondence based on configuration information. The configuration information may be information statically configured in the first device, or may be information delivered by the management and control device to the first device.

Optionally, the first device is a device in a network that a device on which the container is deployed accesses, and that the first device obtains the packet includes: The first device receives the packet sent by the device on which the container is deployed. The packet is generated by the device on which the container is deployed.

According to a second aspect, a packet management and control apparatus is provided. The packet management and control apparatus includes modules configured to perform the method according to any one of the first aspect or the optional manners of the first aspect. The modules may be implemented based on software, hardware, or a combination of software and hardware, and the modules may be randomly combined or divided based on a specific implementation.

According to a third aspect, a packet management and control apparatus is provided. The packet management and control apparatus includes a memory and a processor. The memory is configured to store a computer program. The processor is configured to execute the computer program stored in the memory, to enable the packet management and control apparatus to perform the method according to any one of the first aspect or the optional manners of the first aspect.

According to a fourth aspect, a packet management and control apparatus is provided. The packet management and control apparatus includes a main control board and an interface board. The main control board and the interface board are configured to implement the method according to any one of the first aspect or the optional manners of the first aspect.

According to a fifth aspect, a packet management and control system is provided. The packet management and control system includes a device on which a container is deployed and a device in a network that the device on which the container is deployed accesses. Either of the device on which the container is deployed and the device in the network that the device on which the container is deployed accesses includes the packet management and control apparatus according to the second aspect or the third aspect.

According to a sixth aspect, a computer-readable storage medium is provided. The computer-readable storage medium stores a computer program. When the computer program is executed, the method according to any one of the first aspect or the optional manners of the first aspect is implemented.

According to a seventh aspect, a computer program product is provided. The computer program product includes a program or code. When the program or the code is executed, the method according to any one of the first aspect or the optional manners of the first aspect is implemented.

According to an eighth aspect, a chip is provided. The chip includes a programmable logic circuit and/or program instructions. When the chip runs, the chip is configured to implement the method according to any one of the first aspect or the optional manners of the first aspect.

For technical effects of the second aspect to the eighth aspect, refer to the technical effects of the first aspect. Details are not described herein again.

### BRIEF DESCRIPTION OF DRAWINGS

FIG. 1 is a diagram of an application scenario according to an embodiment of this application;
FIG. 2 is a diagram of a device on which a container is deployed according to an embodiment of this application;
FIG. 3 is a flowchart of a packet management and control method according to an embodiment of this application;
FIG. 4 is a diagram of an APN header according to an embodiment of this application;
FIG. 5 is a diagram of a TCP option field according to an embodiment of this application;
FIG. 6 is a diagram of a packet management and control apparatus according to an embodiment of this application;
FIG. 7 is a diagram of another packet management and control apparatus according to an embodiment of this application; and
FIG. 8 is a diagram of still another packet management and control apparatus according to an embodiment of this application.

### DESCRIPTION OF EMBODIMENTS

The following further describes in detail implementations of this application with reference to accompanying drawings. An application scenario of this application is first described.

The application scenario of this application provides a communication system including a network and devices that access the network. The network is configured to provide a packet forwarding service for the devices that accesses the network, allowing different devices that access the network to communicate with each other.

The network is one network domain, or the network includes at least two network domains. The network includes a metropolitan area network, a wide area network, a campus network, the internet, a dedicated network, a data center network (data center network, DCN), and the like. The network includes multiple network devices. The multiple network devices include a forwarding device, and may further include a security device. The forwarding device is configured to forward a packet, and the security device is configured to ensure security of the network. For example, the forwarding device is a switch or a router, and the security device is a firewall (firewall).

The devices that access the network include a host (host), a server (server), and the like. An application may be deployed on the host, and the server may provide a service corresponding to the application for the host. For example, a video application is deployed on the host, and the server may provide a service (namely, a video service) corresponding to the video application for the host. For another example, an audio application is deployed on the host, and the server may provide a service (namely, an audio service) corresponding to the audio application for the host. Optionally, a network device (for example, the forwarding device) in the network includes an access device. The host, the server, and the like are connected to the access device in the network to access the network. The access device may be a leaf (leaf) device. For example, the access device may be a leaf switch. It should be noted that the host in embodiments of this application may be a terminal like a mobile phone, a tablet computer, a notebook computer, a desktop computer, a television, a vehicle-mounted terminal, or a personal digital assistant (personal digital assistant, PDA). The server may be a server, a server cluster including several servers, or a cloud computing service center. This is not limited in embodiments of this application.

Optionally, a container is deployed on at least one device (for example, the host) that accesses the network, one application is deployed in each container, and one application is deployed in one or more containers. In this way, different applications on a same device can be isolated by using containers. A container is a computing unit (or referred to as a virtual computer) that can run independently and that is implemented based on a virtualisation technology. The container has a computing resource, a memory resource, and a file system. In some embodiments, the container is also referred to as a point of deployment (point of deployment, POD) or a deployment unit.

In an optional embodiment, the communication system further includes a management and control device. The management and control device is configured to manage and control the container. For example, the management and control device is configured to control the container to go online, go offline, migrate, and the like. That the management and control device controls a container to go online on a device may be that the management and control device deploys or creates the container on the device. That the management and control device controls a container to go offline on a device may be that the management and control device destroys the container on the device. That the management and control device controls a container to migrate from a device to another device includes: The management and control device controls the container to go offline on the device and controls the container to go online on the another device.

In an optional embodiment, the management and control device includes a container management platform. The container management platform controls the container to go online, go offline, migrate, and the like. In an embodiment, the container management platform includes a container management component. The container management component controls the container to go online, go offline, migrate, and the like. In an example, the container management platform is K8s, and the container management component is a K8s master. The K8s master is also referred to as a K8s management node, a K8s management component, a K8s management unit, a K8s management module, or the like. K8s is short for Kubernetes. Kubernetes comes from the Greek language, and means a "helmsman" or a "navigator". Kubernetes is an open-source system used to automatically deploy, scale, and manage containerized (containerized) applications. Kubernetes aims to provide a platform for automatically deploying, scaling, and running application containers across host clusters.

In an optional embodiment, the management and control device is further configured to: when a container goes online, generate a correspondence between an identifier of the container and an identifier of an application deployed in the container, and send the correspondence to a device on which the container is deployed. When generating a packet of the container, the device on which the container is deployed includes, in the packet of the container, the identifier of the application deployed in the container, and the device on which the container is deployed or a device (for example, the security device) in a network that the device on which the container is deployed accesses manages and controls the packet of the container based on the identifier that is of the application deployed in the container and that is carried in the packet of the container. The device on which the container is deployed is a device on which the container goes online. For example, if a container goes online on a device, the device is a device on which the container is deployed. Optionally, the management and control device is further configured to: when the container goes offline, clear the correspondence between the identifier of the container and the identifier of the application deployed in the container. The management and control device is further configured to: after the container migrates from a device to another device, send, to the another device, the correspondence between the identifier of the container and the identifier of the application deployed in the container. In an embodiment, the management and control device includes a container management component and an identifier management component. The container management component is configured to control the container to go online, go offline, migrate, and the like. The identifier management component is configured to generate the correspondence between the identifier of the container and the identifier of the application deployed in the container, and send the correspondence to the device on which the container is deployed. In addition, the identifier management component is configured to: when the container goes offline, clear the correspondence between the identifier of the container and the identifier of the application deployed in the container, and the identifier management component is configured to: after the container migrates, send, to the device on which the container is located after the migration, the correspondence between the identifier of the container and the identifier of the application deployed in the container. The container management component is also referred to as a container management node, a container management unit, a container management module, a container management plug-in, or the like. The identifier management component is also referred to as an identifier management node, an identifier management unit, an identifier management module, an identifier management plug-in, or the like. This is not limited in embodiments of this application.

Optionally, because the container managed by the management and control device may be deployed in multiple devices, the correspondence (namely, the correspondence between the identifier of the container and the identifier of the application deployed in the container) generated by the management and control device may further include a location at which the container goes online, and the location at which the container goes online indicates a specific device on which the container goes online. For example, the location at which the container goes online is an identifier of the device on which the container goes online (namely, the device on which the container is deployed). In embodiments of this application, the location at which the container goes online is carried in the correspondence, so that the management and control device can send, based on the location at which the container goes online, the correspondence to the device on which the container is deployed (namely, the device on which the container goes online). This is not limited in embodiments of this application.

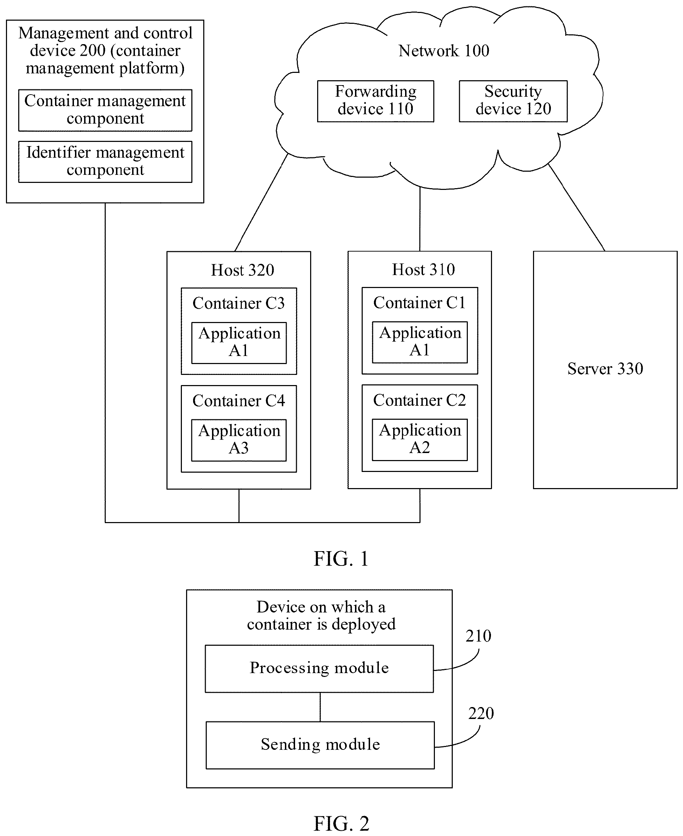

In an example, FIG. 1 is a diagram of an application scenario according to an embodiment of this application. A communication system provided in the application scenario includes a network 100, a management and control device 200, and a host 310, a host 320, and a server 330 that access the network 100. The network 100 includes a forwarding device 110 configured to forward a packet and a security device 120 configured to ensure security of the network 100. It should be noted that FIG. 1 shows only an example of devices included in the network 100. During actual application, the network 100 includes multiple forwarding devices, and the network 100 includes one or more security devices. For example, the network 100 includes multiple network domains, and each network domain includes multiple forwarding devices. There is one security device between any two of the multiple network domains, and the security device may be located in the network domain, or may be located outside the network domain. In an embodiment, the multiple network domains include an internet protocol (internet protocol, IP) network domain.

As shown in FIG. 1, containers C1 and C2 are deployed on the host 310, an application A1 is deployed in the container C1, and an application A2 is deployed in the container C2. Containers C3 and C4 are deployed on the host 320, the application A1 is deployed in the container C3, and an application A3 is deployed in the container C4. In other words, the application A1 is deployed in two containers, and the two containers are deployed on different hosts. The application A2 and the application A3 each are deployed in one container. The management and control device 200 is separately connected to the host 310 and the host 320, and the management and control device 200 is configured to control the containers C1 to C4 to go online, go offline, migrate, and the like. Optionally, when any one of the containers C1 to C4 goes online, the management and control device 200 generates a correspondence between an identifier of the container and an identifier of an application deployed in the container, and sends the correspondence to a device on which the container is deployed. When generating a packet of the container, the device on which the container is deployed includes, in the packet of the container, the identifier of the application deployed in the container, and the device on which the container is deployed or the device (for example, the security device 120) in the network 100 manages and controls the packet of the container based on the identifier that is of the application deployed in the container and that is carried in the packet of the container. Optionally, the management and control device 200 is further configured to: when any one of the containers C1 to C4 goes offline, clear the correspondence between the identifier of the container and the identifier of the application deployed in the container, and the management and control device 200 is further configured to: after any one of the containers C1 to C4 migrates, send, to a device on which the container is located after the migration, the correspondence between the identifier of the container and the identifier of the application deployed in the container. As shown in FIG. 1, the management and control device 200 includes a container management component and an identifier management component. The container management component is configured to control the container to go online, go offline, migrate, and the like. The identifier management component is configured to maintain the correspondence between the identifier of the container and the identifier of the application deployed in the container. For example, the identifier management component is configured to: when the container goes online, generate the correspondence between the identifier of the container and the identifier of the application deployed in the container, the identifier management component is configured to: when the container goes offline, clear the correspondence between the identifier of the container and the identifier of the application deployed in the container, and the identifier management component is configured to: after the container migrates, send, to the device on which the container is located after the migration, the correspondence between the identifier of the container and the identifier of the application deployed in the container.

In an example, the management and control device 200 controls the container C1 to go online on the host 310. When the container C1 goes online on the host 310, the management and control device 200 generates a correspondence between an identifier "C1" of the container C1 and an identifier "A1" of the application A1 deployed in the container C1 (for ease of description, the correspondence is referred to as a correspondence 1). The management and control device 200 sends the correspondence 1 to the host 310. When the host 310 generates a packet of the container C1 (for example, a packet of the container C1 generated by the host 310 when the application A1 deployed in the container C1 needs to access the server 330), the host 310 determines, based on the identifier "C1" of the container C1 and the correspondence 1, the identifier "A1" of the application A1 deployed in the container C1, and the host 310 generates a packet A of the container C1 based on the identifier "A1" of the application A1 deployed in the container C1, where the packet A includes the identifier "A1" of the application A1 deployed in the container C1. In an embodiment, after the host 310 generates the packet A, the host 310 manages and controls the packet A based on the identifier "A1" of the application A1 included in the packet A. For example, the host 310 determines a management and control policy of the packet A based on the identifier "A1" of the application A1 included in the packet A, and the host 310 manages and controls the packet A according to the management and control policy of the packet A. In another embodiment, after generating the packet A, the host 310 sends the packet A. After the security device 120 receives the packet A, the security device 120 manages and controls the packet A based on the identifier "A1" of the application A1 included in the packet A. For example, the security device 120 determines a management and control policy of the packet A based on the identifier "A1" of the application A1 included in the packet A, and the security device 120 manages and controls the packet A according to the management and control policy of the packet A.

In an optional embodiment, when the container C1 goes online on the host 310, the management and control device 200 generates a correspondence 1' based on an identifier of the host 310, the identifier "C1" of the container C1, and the identifier "A1" of the application A1 deployed in the container C1. The correspondence 1' includes the identifier of the host 310 and the correspondence 1, and the identifier of the host 310 in the correspondence 1' indicates that a location at which the container C1 goes online is the host 310. The management and control device 200 sends the correspondence 1 (for example, sends the correspondence 1') to the host 310 based on the location at which the container C1 goes online.

In an optional embodiment, the management and control device 200 further controls the container C1 to go offline on the host 310. When the container C1 goes offline on the host 310, the management and control device 200 may clear the correspondence 1 (for example, clear the correspondence 1') stored in the management and control device 200. In addition, the management and control device 200 may further indicate the host 310 to send and clear the correspondence 1 stored in the host 310. This is not limited in this embodiment of this application.

In an optional embodiment, the management and control device 200 further controls the container C1 to migrate from the host 310 to the host 320. After the container C1 migrates from the host 310 to the host 320, the management and control device 200 sends the correspondence 1 to the host 320. For example, after the container C1 migrates from the host 310 to the host 320, the management and control device 200 updates the identifier of the host 310 included in the correspondence 1' to an identifier of the host 320, to update the location at which the container C1 goes online to the host 320, and the management and control device 200 sends the correspondence 1 (for example, sends an updated correspondence 1') to the host 320 based on the location at which the container C1 goes online recorded in the updated correspondence 1'. Optionally, the management and control device 200 controls, based on event triggering, the container C1 to migrate from the host 310 to the host 320. For example, when the host 310 is heavily loaded, the management and control device 200 controls the container C1 to migrate from the host 310 to the host 320. Alternatively, when the host 310 is faulty, the management and control device 200 controls the container C1 to migrate from the host 310 to the host 320. Alternatively, the management and control device 200 controls, based on a migration request of a user, the container C1 to migrate from the host 310 to the host 320. This is not limited in this embodiment of this application.

Herein, an example in which the container C1 goes online, goes offline, and migrates, and the packet of the container C1 is managed and controlled is used for description. For a process in which the containers C2 to C4 go online, go offline, and migrate, and packets of the containers C2 to C4 are managed and controlled, refer to the related descriptions of the container C1. Details are not described herein again.

In an optional embodiment, after a device on which a container is deployed obtains a correspondence between an identifier of the container and an identifier of an application deployed in the container, when the container needs to access a service corresponding to the application deployed in the container (for example, when the application deployed in the container needs to access the corresponding service), the device on which the container is deployed obtains the identifier of the application based on the identifier of the container and the correspondence, and generates a packet of the container based on the identifier of the application, where the packet of the container includes the identifier of the application. After generating the packet of the container, the device on which the container is deployed sends the packet of the container to a server that provides the corresponding service. FIG. 1 is used as an example. For example, the server 330 is configured to provide a service corresponding to the application A1 (for example, the application A1 is a video application, and the server 330 is configured to provide a corresponding video service). After the host 310 obtains the correspondence between the identifier "C1" of the container C1 and the identifier "A1" of the application A1 deployed in the container C1, when the container C1 needs to access the service corresponding to the application Al, the host 310 determines, based on the identifier "C1" of the container C1 and the correspondence, the identifier "A1" of the application A1 deployed in the container C1, and generates the packet A of the container C1 based on the identifier "A1" of the application Al, where the packet A includes the identifier "A1" of the application A1. Optionally, after the host 310 generates the packet A of the container C1, the host 310 sends the packet A to the server 330 via the network 100. In a transmission process of the packet A in the network 100, the forwarding device 110 in the network 100 forwards the packet A, and the security device 120 in the network 100 manages and controls the packet A. In an example, FIG. 2 is a diagram of a device on which a container is deployed (for example, a host 310 on which a container C1 is deployed). The device on which the container is deployed includes a processing module 210 and a sending module 220. The processing module 210 is configured to: when the container needs to access a service corresponding to an application deployed in the container, obtain an identifier of the application based on an identifier of the container and a correspondence, and generate a packet of the container based on the identifier of the application. The sending module 220 is configured to send the packet of the container to a server that provides the corresponding service. This is not limited in this embodiment of this application.

It should be noted that the identifier of the application in embodiments of this application may be a name of the application or any piece of identification information that is allocated to the application and that can uniquely identify the application. Because a name of an application is usually long, carrying the name of the application in a packet easily increases packet overheads. Therefore, the identifier of the application in embodiments of this application may be the identification information allocated to the application, and a length of the identification information may be less than a length of the name of the application. Carrying the identification information in a packet has small impact on packet overheads, and the identification information can be conveniently carried in the packet. Optionally, when a container goes online, the management and control device allocates an identifier to an application deployed in the container. For example, when the container goes online, the identifier management component in the management and control device allocates the identifier to the application deployed in the container. This is not limited in embodiments of this application.

It should be noted that the communication system shown in FIG. 1 is merely used as an example. In some embodiments, containers are also deployed in the server 330 to isolate different services. In addition, the communication system may further include another device. For example, the communication system further includes a network controller, configured to control the device in the network 100. The network controller and the management and control device 200 are one device or two independent devices. A quantity of devices in the communication system and a connection relationship between the devices may be configured based on a requirement. This is not limited in embodiments of this application.

A packet of a container usually includes an IP address of the container. For example, a source IP address of the packet of the container is the IP address of the container. In a current packet management and control solution, the packet of the container is managed and controlled based on the IP address of the container carried in the packet of the container. For example, a management and control policy of the packet of the container is determined based on the IP address of the container carried in the packet of the container, and the packet of the container is further managed and controlled according to the management and control policy of the packet of the container. However, the container is highly dynamic and dispersed, and the IP address of the container dynamically changes with going online, going offline, migration, or the like of the container. Consequently, difficulty of the current packet management and control solution is high. For example, if the packet of the container is managed and controlled based on the IP address of the container, the management and control policy needs to be frequently modified. Consequently, management and control difficulty is high. The container C1 in FIG. 1 is used as an example. If the packet of the container C1 is managed and controlled based on an IP address of the container C1, and the container C1 migrates from the host 310 to the host 320, the IP address of the container C1 changes. In this case, the management and control policy of the packet of the container C1 needs to be modified, and an entire process is complex. Consequently, packet management and control difficulty is high. In embodiments of this application, the identifier of the application deployed in the container is carried in the packet of the container, and the packet of the container is managed and controlled based on the identifier of the application carried in the packet of the container. Because the identifier of the application deployed in the container does not dynamically change with going online, going offline, migration, or the like of the container, management and control difficulty is low.

The foregoing describes the application scenario of this application. The following describes an embodiment of a packet management and control method in this application.

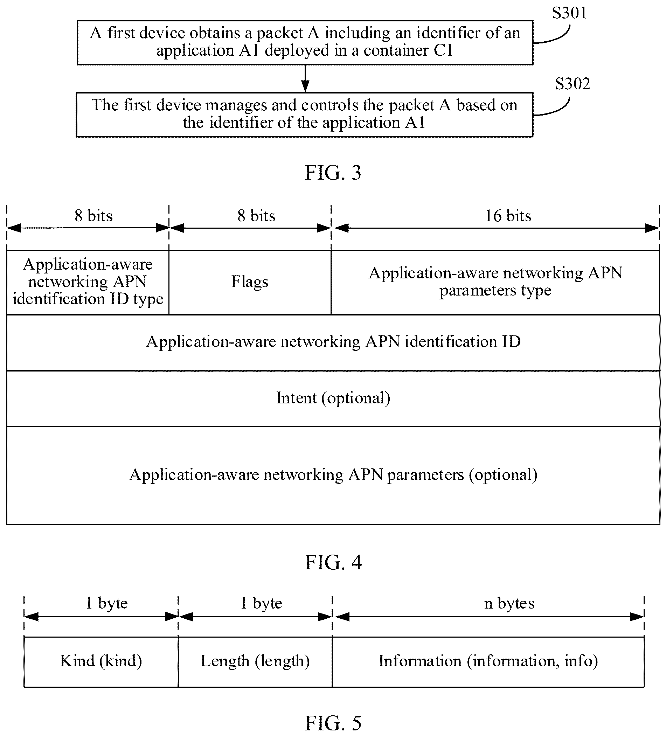

FIG. 3 is a flowchart of a packet management and control method according to an embodiment of this application. The packet management and control method is performed by a first device. The first device is a device on which a container is deployed or a device in a network that the device on which the container is deployed accesses. The following uses an example in which the first device is a device on which a container C1 is deployed or a device (for example, a security device) in a network accessed by the device on which the container C1 is deployed for description. As shown in FIG. 1, the first device may be the host 310 or the security device 120. As shown in FIG. 3, the packet management and control method includes the following steps S301 and S302.

S301: The first device obtains a packet A including an identifier of an application A1 deployed in the container C1.

The packet A is a packet of the container C1, and may be specifically a packet of the application A1 deployed in the container C1. The packet A includes data of the application A1. For example, the data of the application A1 is in a payload of the packet A. In an example, the application A1 is a video application, and the data of the application A1 is video data. In another example, the application A1 is an audio application, and the data of the application A1 is audio data.

In this embodiment of this application, the packet A is an internet protocol version 6 (internet protocol version 6, IPv6) packet or an internet protocol version 4 (internet protocol version 4, IPv4) packet. When the packet A is the IPv6 packet, the packet A includes an application-aware networking (application-aware networking, APN) header or a transmission control protocol (transmission control protocol, TCP) header including the identifier of the application A1. When the packet A is the IPv4 packet, the packet A includes a TCP header including the identifier of the application A1. The following describes, in two embodiments, manners in which the packet A carries the identifier of the application A1.

**In a first embodiment,** the packet A is the IPv6 packet, and the packet A includes the APN header including the identifier of the application A.

Optionally, the packet A includes an IPv6 header and an IPv6 extension header. The IPv6 extension header includes the APN header, and the APN header is also referred to as an IPv6-based APN header, which is briefly referred to as an APN6 header. The IPv6 extension header may be a hop by hop options header (hop by hop header, HBH) and a destination options header (destination options header, DOH). This is not limited in this embodiment of this application. Optionally, the APN header includes an APN identification (APN identification, APN ID) field, and the APN ID field includes the identifier of the application A. For example, the APN ID field includes an application group identification (application group identification, APP-Group-ID) subfield, a user group identification (user group identification, USER-Group-ID) subfield, and a reserved subfield. The identifier of the application A is included in at least one of the APP-Group-ID subfield, the USER-Group-ID subfield, and the reserved subfield.

In an example, FIG. 4 is a diagram of an APN header according to an embodiment of this application. The APN header includes the following fields: APN ID type, flags, APN parameters (parameters) type, APN ID, intent (intent), and APN parameters. Both a length of the APN ID type field and a length of the flags field are 8 bits, a length of the APN parameters type field is 16 bits, a length of the APN ID field is 32 bits, 64 bits, or 128 bits, and a length of the intent field is 32 bits. Both the intent field and the APN parameters field are optional fields. The APN ID field is used to carry an APN ID, and a length of the APN ID is 32 bits, 64 bits, or 128 bits. The APN ID type field indicates the length of the APN ID carried in the APN ID field. For example, when a value of the APN ID type field is a first value (for example, type I), the APN ID type field indicates that the length of the APN ID carried in the APN ID field is 32 bits; when a value of the APN ID type field is a second value (for example, type II), the APN ID type field indicates that the length of the APN ID carried in the APN ID field is 64 bits; or when a value of the APN ID type field is a third value (for example, type III), the APN ID type field indicates that the length of the APN ID carried in the APN ID field is 128 bits. The flags field is currently reserved and may be defined in a future version. The intent field indicates a group of service requirements of a service on a network. The APN parameters field is used to carry APN parameters, and the APN parameters type field indicates which APN parameters are carried in the APN parameters field. For example, the APN parameters type field indicates, in a form of a bit map (bit map), which APN parameters are carried in the APN parameters field. For example, in 16 bits arranged from the least significant bit to the most significant bit in the APN parameters type field, a 1^{st} bit corresponds to a bandwidth requirement, a 2^{nd} bit corresponds to a delay requirement, a 3^{rd} bit corresponds to a jitter requirement, and a 4^{th} bit corresponds to a packet loss rate requirement. When the 1^{st} bit is set (set to 1), the APN parameters type field indicates that the APN parameters field carries a bandwidth requirement parameter. When the 2^{nd} bit is set, the APN parameters type field indicates that the APN parameters field carries a delay requirement parameter. When the 3^{rd} bit is set, the APN parameters type field indicates that the APN parameters field carries a jitter requirement parameter. When the 4^{th} bit is set, the APN parameters type field indicates that the APN parameters field carries a packet loss rate requirement parameter. In this embodiment of this application, the identifier of the application A may be carried in the APN ID field in the APN header shown in FIG. 4.

This specification describes only an example of a structure of the APN header. For detailed descriptions of the APN header, refer to the internet engineering task force (internet engineering task force, IETF) document "draft-li-apn-header". Details are not described herein. In an APN technology, APN information is carried in an APN header of a packet, so that after the packet enters a network, the network can perceive an APN service and a requirement of the APN service based on the APN information carried in the APN header of the packet, to provide refined network resource allocation, transmission path scheduling, and service-level agreement (service-level agreement, SLA) quality assurance for the APN service. The APN information includes but is not limited to an APN ID and APN parameters. In this embodiment of this application, an identifier of an application deployed in a container is carried in the APN header of the packet of the container, so that the network can manage and control the packet of the container based on the identifier of the application when perceiving the APN service and the requirement of the APN service.

**In a second embodiment,** the packet A is the IPv4 packet or the IPv6 packet, and the packet A includes the TCP header including the identifier of the application A. Optionally, the TCP header includes an option (option) field including the identifier of the application A.

For ease of description, the option field included in the TCP header is referred to as a TCP option field. FIG. 5 is a diagram of a TCP option field according to an embodiment of this application. The TCP option field includes the following subfields: kind (kind), length, and information (information, info). The kind subfield is also referred to as a type subfield, and the information subfield is also referred to as a data subfield. Both a length of the kind subfield and a length of the length subfield are 1 byte, and a length of the information subfield is n bytes, where n is a positive integer. The kind subfield indicates a type of the TCP option field, the length subfield indicates a length of the TCP option field (namely, a sum of the lengths of the kind subfield, the length subfield, and the information subfield), and the information subfield is used to carry specific information. In this embodiment of this application, the identifier of the application A may be carried in the information subfield in the TCP option field shown in FIG. 5.

In this embodiment of this application, the first device may be the device (for example, a host) on which the container C1 is deployed, or may be the device in the network accessed by the device on which the container C1 is deployed. The following describes, in two embodiments based on different first devices, implementations in which the first device obtains the packet A.

**In a first embodiment,** the first device is the device (for example, the host) on which the container C1 is deployed, and the first device generates the packet A.

Optionally, the first device obtains the identifier of the application A1 deployed in the container C1, and the first device generates the packet A based on the identifier of the application A1. In an embodiment, the first device generates an IPv6 packet based on the identifier of the application A1. The IPv6 packet includes the APN header shown in FIG. 4, and the APN ID field in the APN header carries the identifier of the application A. In another embodiment, the first device generates an IPv4 packet based on the identifier of the application A1. The IPv4 packet includes a TCP header, the TCP header includes the option field shown in FIG. 5, and the option field carries the identifier of the application A. In still another embodiment, the first device generates an IPv6 packet based on the identifier of the application A1. The IPv6 packet includes a TCP header, the TCP header includes the option field shown in FIG. 5, and the option field carries the identifier of the application A. In this embodiment of this application, when the container C1 needs to access a service corresponding to the application A1, the first device may obtain the identifier of the application A1 deployed in the container C1, and generate the packet A based on the identifier of the application A1. In an example, when the first device receives an access request triggered by a user based on the application A1 deployed in the container C1, the first device determines that the container C1 needs to access the service corresponding to the application A1. In another example, when the first device receives an access request that is sent by another device and that corresponds to the application A1 deployed in the container C1, the first device determines that the container C1 needs to access the service corresponding to the application A1. The first device may alternatively determine, in another manner, that the container C1 needs to access the service corresponding to the application A1. This is not limited in this embodiment of this application.

In an optional embodiment, the first device obtains, based on an identifier of the container C1 and a first correspondence, the identifier of the application A1 deployed in the container C1, and then the first device generates the packet A based on the identifier of the application A1. For example, the first device searches the first correspondence based on the identifier of the container C1, and the first device determines an identifier that is of an application in the first correspondence and that corresponds to the identifier of the container C1 as the identifier of the application A1 deployed in the container C1. The first correspondence is a correspondence between the identifier of the container C1 and the identifier of the application A1 deployed in the container C1. In an example, the first correspondence is shown in the following Table 1. The first device searches the first correspondence based on the identifier "C1" of the container C1 to determine the identifier "A1" of the application A1 deployed in the container C1, and the first device generates the packet A based on the identifier "A1" of the application A1.

**Table 1**

| Identifier of a container | Identifier of an application |
|---|---|
| C1 | A1 |

Optionally, the first device is the device on which the container C1 is deployed, and the first device includes a root network system (root network system, Root NS). The root NS obtains the identifier of the application A1 based on the identifier of the container C1 and the first correspondence, and further generates the packet A based on the identifier of the application A1.

Optionally, before the first device generates the packet A, the first device obtains the first correspondence. In this embodiment of this application, the first correspondence is generated by a management and control device based on the identifier of the container C1 and the identifier of the application A1 deployed in the container C1, or may be generated by the first device based on configuration information. In an embodiment, the first correspondence is generated by the management and control device based on the identifier of the container C1 and the identifier of the application A1 deployed in the container C1. After generating the first correspondence, the management and control device sends the first correspondence to the first device, and the first device receives the first correspondence from the management and control device. For example, the root NS in the first device receives the first correspondence from the management and control device and stores the first correspondence. Optionally, when the container C1 goes online on the first device, the management and control device generates the first correspondence based on the identifier of the container C1 and the identifier of the application A1 deployed in the container C1, and sends the first correspondence to the first device. The first device receives the first correspondence. In another embodiment, the first correspondence is generated by the first device based on the configuration information, and the configuration information includes the identifier of the container C1 and the identifier of the application A1 deployed in the container C1. The first device generates the first correspondence based on the identifier of the container C1 and the identifier of the application A1 deployed in the container C1 that are included in the configuration information. The configuration information may be sent by the management and control device to the first device, or may be statically configured in the first device.

**In a second embodiment,** the first device is the device (for example, the security device) in the network accessed by the device (for example, the host) on which the container C1 is deployed, and the first device receives the packet A sent by the device (for example, the host) on which the container C1 is deployed.

When the first device is the device in the network accessed by the device on which the container C1 is deployed, the first device is connected to the device of the container C1. After generating the packet A, the device on which the container C1 is deployed sends the packet A to the network accessed by the device on which the container C1 is deployed. For example, the device on which the container C1 is deployed sends, via the network, the packet A to a server that provides a service corresponding to the application A1. The first device is the device in the network, and the first device receives the packet A. For an implementation process in which the device on which the container C1 is deployed generates the packet A, refer to the first embodiment. Details are not described herein again.

S302: The first device manages and controls the packet A based on the identifier of the application A1.

In an optional embodiment, the first device determines a management and control policy X1 of the packet A based on the identifier of the application A1 included in the packet A, and the first device forwards or discards the packet A according to the management and control policy X1. The management and control policy X1 may be a correspondence between the identifier of the application A1 and a management and control operation, and the management and control operation includes forwarding or discarding. In an example, the forwarding operation is a permit (permit) operation, and the discarding operation is a deny (deny) operation.

In an embodiment, the management and control policy X1 is shown in the following Table 2. The management and control policy X1 is a correspondence between the identifier "A1" of the application A1 and the management and control operation "permit", and the management and control operation X1 indicates that a packet (for example, the packet A) including the identifier of the application A1 is permitted. The first device forwards the packet A based on the management and control operation X1. For example, the first device searches for a route based on a destination address of the packet A to forward the packet A. For example, the first device searches for the route based on the destination address of the packet A to determine an egress port of the packet A, and the first device forwards the packet A through the egress port.

**Table 2**

| Identifier of an application | Management and control operation |
|---|---|
| A1 | Permit (permit) |

In another embodiment, the management and control policy X1 is shown in the following Table 3. The management and control policy X1 is a correspondence between the identifier "A1" of the application A1 and the management and control operation "deny", and the management and control operation X1 indicates that a packet (for example, the packet A) including the identifier of the application A1 is denied. The first device discards the packet A based on the management and control operation X1.

**Table 3**

| Identifier of an application | Management and control operation |
|---|---|
| A1 | Deny (deny) |

In this embodiment of this application, the management and control policy X1 is preconfigured in the first device. In an embodiment, the first device is the device on which the container C1 is deployed, the management and control policy X1 is configured by the management and control device in the first device, and the first device obtains the configured management and control policy X1. In another embodiment, the first device is the device in the network accessed by the device on which the container C1 is deployed, the management and control policy X1 is configured by a network controller in the first device, and the first device obtains the management and control policy X1 configured by the controller. Optionally, the management and control policy X1 may alternatively be statically configured by the user in the first device, and the first device obtains the management and control policy X1 configured by the user. This is not limited in this embodiment of this application.

In conclusion, in the technical solutions provided in this embodiment of this application, the packet of the container includes the identifier of the application deployed in the container, and the first device manages and controls the packet of the container based on the identifier of the application included in the packet of the container. Because the identifier of the application deployed in the container does not dynamically change with going online, going offline, migration, or the like of the container, difficulty of managing and controlling the packet of the container is low. For example, the first device is the device in the network that the device on which the container is deployed accesses. In this embodiment of this application, the packet of the container is managed and controlled based on the identifier of the application included in the packet of the container, so that the device in the network that the device on which the container is deployed accesses does not perceive a dynamic change of the container, for example, going online, going offline, or migration.

The foregoing describes the method embodiment of this application, and the following describes apparatus embodiments of this application. Apparatuses in this application may be configured to perform the method in this application. For details that are not disclosed in the apparatus embodiments of this application, refer to the method embodiment.

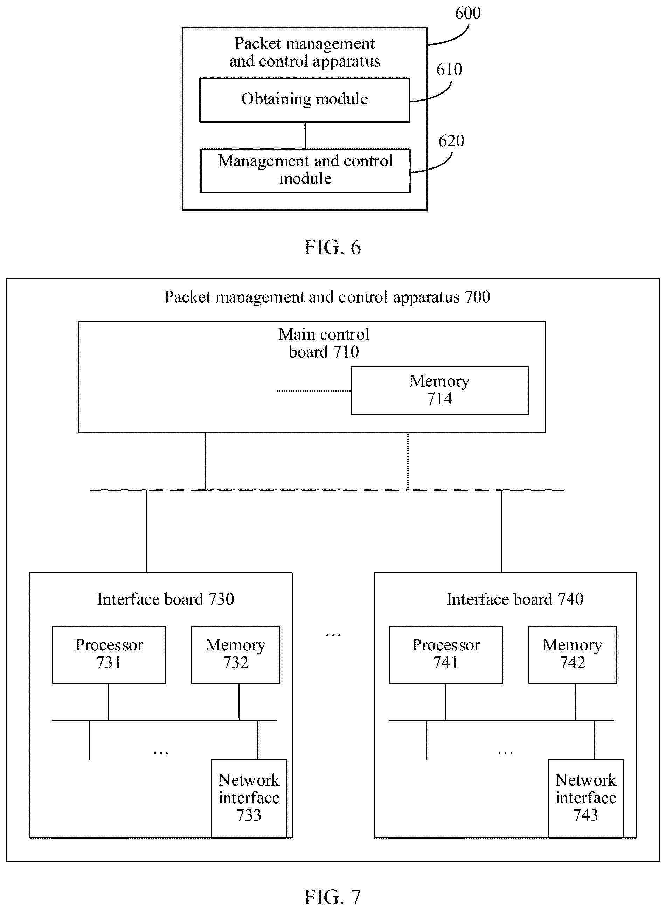

FIG. 6 is a diagram of a packet management and control apparatus 600 according to an embodiment of this application. The packet management and control apparatus 600 is used in the first device in the embodiment shown in FIG. 3. For example, the packet management and control apparatus 600 is the first device or a functional component in the first device. The first device may be the host 310 or the security device 120 in FIG. 1. The packet management and control apparatus 600 is configured to perform the packet management and control method provided in the embodiment shown in FIG. 3. As shown in FIG. 6, the packet management and control apparatus 600 includes an obtaining module 610 and a management and control module 620.

The obtaining module 610 is configured to obtain a packet including an identifier of an application deployed in a container.

The management and control module 620 is configured to manage and control the packet based on the identifier of the application.

For a function implementation of the obtaining module 610, refer to the descriptions in S301. For a function implementation of the management and control module 620, refer to the descriptions in S302.

Optionally, the packet is an IPv6 packet, and the packet includes an APN header including the identifier of the application; or the packet is an IPv4 packet or an IPv6 packet, and the packet includes a TCP header including the identifier of the application.

Optionally, the management and control module 620 is configured to determine a management and control policy of the packet based on the identifier of the application, and forward or discard the packet according to the management and control policy.

Optionally, the first device is a device on which the container is deployed, and the obtaining module 610 is configured to obtain the identifier of the application and generate the packet based on the identifier of the application.

Optionally, the obtaining module 610 is configured to obtain a correspondence between an identifier of the container and the identifier of the application, and obtain the identifier of the application based on the identifier of the container and the correspondence.

Optionally, the obtaining module 610 is configured to receive the correspondence from a management and control device, where the correspondence is generated by the management and control device based on the identifier of the container and the identifier of the application.

Optionally, the obtaining module 610 is configured to generate the correspondence based on configuration information. The configuration information may be information statically configured in the first device, or may be information delivered by the management and control device to the first device.

Optionally, the first device is a device in a network that a device on which the container is deployed accesses, and the obtaining module 610 is configured to receive the packet sent by the device on which the container is deployed. The packet is a packet generated by the device on which the container is deployed.

In conclusion, in the technical solutions provided in this embodiment of this application, the packet of the container includes the identifier of the application deployed in the container, and the first device manages and controls the packet of the container based on the identifier of the application included in the packet of the container. Because the identifier of the application deployed in the container does not dynamically change with going online, going offline, migration, or the like of the container, difficulty of managing and controlling the packet of the container is low.

It should be understood that the packet management and control apparatus provided in this embodiment of this application may alternatively be implemented by using an application-specific integrated circuit (application-specific integrated circuit, ASIC) or a programmable logic device (programmable logic device, PLD). The PLD may be a complex programmable logical device (complex programmable logical device, CPLD), a field programmable gate array (field programmable gate array, FPGA), generic array logic (generic array logic, GAL), or any combination thereof. Alternatively, the packet management and control method provided in the foregoing method embodiment may be implemented by using software. When the packet management and control method provided in the foregoing method embodiment is implemented by using software, modules in the packet management and control apparatus may also be software modules.

An embodiment of this application provides a packet management and control apparatus. The packet management and control apparatus includes a memory and a processor. The memory is configured to store a computer program. The processor is configured to execute the computer program stored in the memory, so that the packet management and control apparatus performs all or some of the steps of the packet management and control method provided in the foregoing method embodiment.

In an example, FIG. 7 is a diagram of another packet management and control apparatus 700 according to an embodiment of this application. The packet management and control apparatus 700 is used in the first device in the embodiment shown in FIG. 3. For example, the packet management and control apparatus 700 is the first device or some components in the first device. The first device may be the host 310 or the security device 120 in FIG. 1. As shown in FIG. 7, the packet management and control apparatus 700 includes a main control board 710, an interface board 730, and an interface board 740. When there are multiple interface boards, a switching board (not shown in FIG. 7) may be included. The switching board is configured to complete data exchange between interface boards (the interface board is also referred to as a line card or a service board).

The main control board 710 is configured to complete functions such as system management, device maintenance, and protocol processing. The interface board 730 and the interface board 740 are configured to provide various service interfaces (for example, a POS interface, a GE interface, and an ATM interface), and implement packet forwarding. The main control board 710 mainly has three types of functional units: a system management and control unit, a system clock unit, and a system maintenance unit. The main control board 710, the interface board 730, and the interface board 740 are connected to a system backplane through a system bus to implement interworking. The interface board 730 includes one or more processors 731. The processor 731 is configured to control and manage the interface board 730 and communicate with a central processing unit 712 on the main control board 710. A memory 732 on the interface board 730 is configured to store the correspondence between the identifier of the container and the identifier of the application in the foregoing embodiment. As shown in FIG. 7, the main control board 710 may include a memory 714. The memory 714 on the main control board 710 may also be configured to store the correspondence between the identifier of the container and the identifier of the application in the foregoing embodiment. This is not limited in this embodiment of this application. The interface board 730 includes one or more network interfaces 733 configured to receive and send a packet. The processor 731 may process the packet received by the network interface 733. Specific implementation processes are not described herein one by one.

It may be understood that, as shown in FIG. 7, in this embodiment, the multiple interface boards are included, and a distributed forwarding mechanism is used. In this mechanism, operations on the interface board 740 are basically similar to operations on the interface board 730. For brevity, details are not described again. In addition, it may be understood that the processor 731 on the interface board 730 and/or a processor 741 on the interface board 740 in FIG. 7 may be dedicated hardware or a chip, for example, a network processor or an application-specific integrated circuit, to implement the foregoing functions, and this implementation is generally referred to as a manner in which a forwarding plane uses dedicated hardware or a chip for processing. In another implementation, the processor 731 on the interface board 730 and/or a processor 741 on the interface board 740 may alternatively use a general-purpose processor, for example, a general-purpose central processing unit (central processing unit, CPU), to implement the functions described above.

In addition, it should be noted that there may be one or more main control boards. When there are multiple main control boards, the main control boards may include an active main control board and a standby main control board. There may be one or more interface boards, and a device with a stronger data processing capability provides more interface boards. When there are multiple interface boards, the multiple interface boards may communicate with each other through one or more switching boards. When there are the multiple interface boards, load sharing and redundancy backup may be implemented together. In a centralized forwarding architecture, the device may not need a switching board, and the interface board provides a function of processing service data of an entire system. In a distributed forwarding architecture, the device includes multiple interface boards, and may implement data exchange between the multiple interface boards through the switching board, to provide a large-capacity data exchange and processing capability. Therefore, a data access and processing capability of the device in the distributed architecture is better than that of a node in the centralized architecture. A specific architecture to be used depends on a networking deployment scenario, and is not limited herein.

In an optional embodiment, the memory 732 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only Memory, CD-ROM) or another compact disc storage, an optical disc storage (including a compact optical disc, a laser disc, an optical disc, a digital versatile disc, a Blu-ray disc, and the like), a magnetic disk or another magnetic storage device, or any other medium that can be used to carry or store expected program code in a form of an instruction or a data structure and that can be accessed by a computer. However, the memory is not limited thereto. The memory 732 may exist independently, and is connected to the processor 731 through the communication bus. Alternatively, the memory 732 and the processor 731 may be integrated together. The memory 732 is configured to store program code, and the processor 731 controls execution of the program code, to perform some or all of the steps of the packet management and control method provided in the foregoing embodiment. The processor 731 is configured to execute the program code stored in the memory 732. The program code may include one or more software modules. The one or more software modules may be the functional modules provided in the embodiment shown in FIG. 6. The memory 714 may also be configured to store program code, and the central processing unit 712 controls execution of the program code, to perform some or all of the steps of the packet management and control method provided in the foregoing embodiment.

In an optional embodiment, the network interface 733 is an apparatus that uses a transceiver, and is configured to communicate with another device or network, for example, the Ethernet, a radio access network (radio access network, RAN), or a wireless local area network (wireless local area network, WLAN).

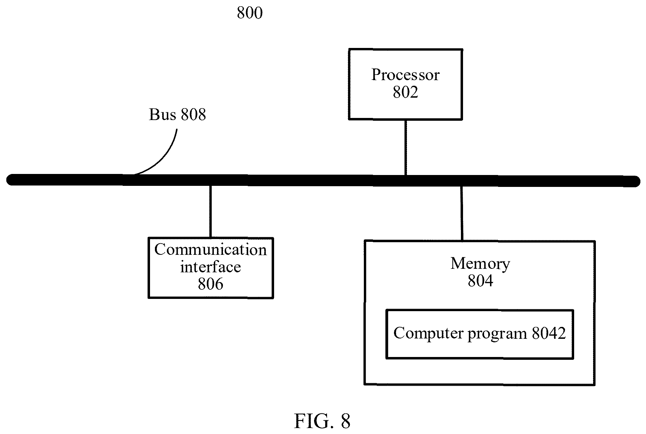

In another example, FIG. 8 is a diagram of still another packet management and control apparatus 800 according to an embodiment of this application. The packet management and control apparatus 800 is used in the first device in the embodiment shown in FIG. 3. For example, the packet management and control apparatus 800 is the first device or some components in the first device. The first device may be the host 310 or the security device 120 in FIG. 1. The packet management and control apparatus 800 is configured to perform the packet management and control method provided in the embodiment shown in FIG. 3. Refer to FIG. 8. The packet management and control apparatus 800 includes a processor 802, a memory 804, a communication interface 806, and a bus 808. The processor 802, the memory 804, and the communication interface 806 are communicatively connected through the bus 808. The processor 802, the memory 804, and the communication interface 806 may alternatively be connected in a connection manner other than the bus 808. A connection manner of the processor 802, the memory 804, and the communication interface 806 is not limited in this embodiment of this application.

The memory 804 is configured to store a computer program 8042. The memory 804 is various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, a register, and the like.

The processor 802 may be a general-purpose processor. The general-purpose processor is a processor that performs a specific step and/or operation by reading and executing a computer program stored in a memory (for example, the memory 804). In a process of performing the foregoing steps and/or operations, the general-purpose processor may use the computer program stored in the memory (for example, the memory 804). For example, the stored computer program is executed to implement related functions of the foregoing obtaining module 610 and the foregoing management and control module 620. The general-purpose processor may be a CPU. The processor 802 may alternatively be a dedicated processor. The dedicated processor is a processor specially designed to perform a specific step and/or operation. The dedicated processor may be an ASIC, an FPGA, a network processor (network processor, NP), or the like. The processor 802 may alternatively be a combination of multiple processors, for example, a multi-core processor. The processor 802 includes at least one circuit, to perform all or some of the steps of the packet management and control method provided in the foregoing embodiment.

The communication interface 806 includes an interface configured to implement interconnection between components inside the packet management and control apparatus 800 and an interface configured to implement interconnection between the packet management and control apparatus 800 and another apparatus (for example, a network device, a host, or a server), for example, an input/output (input/output, I/O) interface, a physical interface, and a logical interface. The physical interface may be a gigabit Ethernet (gigabit ethernet, GE) interface, and is configured to implement interconnection between the packet management and control apparatus 800 and another device. The logical interface is an interface inside the packet management and control apparatus 800, and is configured to implement interconnection between the components inside the packet management and control apparatus 800. It is easy to understand that the communication interface 806 is used by the packet management and control apparatus 800 to communicate with the another device. For example, the communication interface 806 is configured to send and receive information, a packet, and the like between the packet management and control apparatus 800 and the another device.

The bus 808 is any type of communication bus, for example, a system bus, configured to implement interconnection between the processor 802, the memory 804, and the communication interface 806.

The foregoing components may be separately disposed on chips that are independent of each other, or at least some or all of the components may be disposed on a same chip. Whether the components are separately disposed on different chips or integrated and disposed on one or more chips usually depends on a requirement of a product design. Specific implementation forms of the foregoing components are not limited in this embodiment of this application.

The packet management and control apparatus 800 shown in FIG. 8 is merely an example. In an implementation process, the packet management and control apparatus 800 may further include other components, which are not listed one by one again in this specification. The packet management and control apparatus 800 shown in FIG. 8 performs all or some of the steps of the packet management and control method provided in the foregoing method embodiment, to perform operations related to packet management and control.

An embodiment of this application provides a packet management and control system, including a device on which a container is deployed and a device (for example, a security device) in a network that the device on which the container is deployed accesses. Either of the device on which the container is deployed and the device in the network that the device on which the container is deployed accesses includes the packet management and control apparatus shown in any one of FIG. 6 to FIG. 8. Alternatively, the device on which the container is deployed is shown in FIG. 2. For example, the packet management and control system is the communication system shown in FIG. 1.

An embodiment of this application provides a computer-readable storage medium. The computer-readable storage medium stores a computer program. When the computer program is executed (for example, executed by a device on which a container is deployed, a device in a network that the device on which the container is deployed accesses, a packet management and control apparatus, a processor, or the like), all or some of the steps of the packet management and control method provided in the foregoing method embodiment are implemented.

An embodiment of this application provides a computer program product. The computer program product includes a program or code. When the program or the code is executed (for example, executed by a device on which a container is deployed, a device in a network that the device on which the container is deployed accesses, a packet management and control apparatus, a processor, or the like), all or some of the steps of the packet management and control method provided in the foregoing method embodiment are implemented.

An embodiment of this application provides a chip. The chip includes a programmable logic circuit and/or program instructions. When running, the chip is configured to implement all or some of the steps of the packet management and control method provided in the foregoing method embodiment.

All or some of the foregoing embodiments may be implemented by using software, hardware, firmware, or any combination thereof. When embodiments are implemented by using the software, all or some of embodiments may be implemented in a form of a computer program product. The computer program product includes one or more computer instructions. When the computer program instructions are loaded and executed on a computer, all or some of procedures or functions according to embodiments of this application are generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage apparatus, for example, a server or a data center, integrating one or more usable media. The usable medium may be a magnetic medium (for example, a floppy disk, a hard disk, or a magnetic tape), an optical medium, a semiconductor medium (for example, a solid-state drive), or the like.

In this application, the term "at least one" means one or more, and "multiple" means two or more. In this application, unless otherwise specified, the symbol "/" usually represents "or". For example, A/B may represent A or B. In this application, the term "and/or" describes only an association relationship between associated objects and represents that three relationships may exist. For example, A and/or B may represent the following three cases: Only A exists, both A and B exist, and only B exists. In addition, for ease of clear description, in this application, words such as "first", "second", and "third" are used to distinguish between same items or similar items whose functions and purposes are basically the same. A person skilled in the art may understand that the words such as "first", "second", and "third" do not limit a quantity and an execution sequence.

Different types of embodiments such as the method embodiments and the apparatus embodiments provided in embodiments of this application may be cross-referenced. This is not limited in embodiments of this application. A sequence of operations in the method embodiments provided in embodiments of this application can be properly adjusted, and the operations can be correspondingly added or deleted based on a situation. Any variation method that can be readily figured out by a person skilled in the art within the technical scope disclosed in this application shall fall within the protection scope of this application. Therefore, details are not described again.

In embodiments of this application, it should be understood that the disclosed apparatuses and the like may be implemented in other composition manners. For example, the apparatus embodiments described above are merely examples. For example, the module division is merely logical function division and may be other division during actual implementation. For example, multiple modules or components may be combined or integrated into another system, or some features may be ignored or not performed.

The modules described as separate parts may or may not be physically separate, and parts described as modules may or may not be physical modules, may be located in one position, or may be distributed on multiple network nodes. Some or all of the modules may be selected based on an actual requirement to achieve the objectives of the solutions of embodiments.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A packet management and control method, wherein the method comprises:
obtaining, by a first device, a packet comprising an identifier of an application deployed in a container; and
managing and controlling, by the first device, the packet based on the identifier of the application.

2. The method according to claim 1, wherein the packet is an internet protocol version 6 IPv6 packet, and the packet comprises an application-aware networking APN header comprising the identifier of the application; or
the packet is an internet protocol version 4 IPv4 packet or an IPv6 packet, and the packet comprises a transmission control protocol TCP header comprising the identifier of the application.

3. The method according to claim 1 or 2, wherein managing and controlling, by the first device, the packet based on the identifier of the application comprises:
determining, by the first device, a management and control policy of the packet based on the identifier of the application; and
forwarding or discarding, by the first device, the packet according to the management and control policy.

4. The method according to any one of claims 1 to 3, wherein the first device is a device on which the container is deployed, and obtaining, by the first device, the packet comprises:
obtaining, by the first device, the identifier of the application; and
generating, by the first device, the packet based on the identifier of the application.

5. The method according to claim 4, wherein obtaining, by the first device, the identifier of the application comprises:
obtaining, by the first device, a correspondence between an identifier of the container and the identifier of the application; and
obtaining, by the first device, the identifier of the application based on the identifier of the container and the correspondence.

6. The method according to claim 5, wherein obtaining, by the first device, the correspondence between the identifier of the container and the identifier of the application comprises:
receiving, by the first device, the correspondence from a management and control device, wherein the correspondence is generated by the management and control device based on the identifier of the container and the identifier of the application.

7. The method according to any one of claims 1 to 3, wherein the first device is a device in a network that a device on which the container is deployed accesses, and obtaining, by the first device, the packet comprises:
receiving, by the first device, the packet sent by the device on which the container is deployed.

8. A packet management and control apparatus, used in a first device, wherein the apparatus comprises:
an obtaining module, configured to obtain a packet comprising an identifier of an application deployed in a container; and
a management and control module, configured to manage and control the packet based on the identifier of the application.

9. The apparatus according to claim 8, wherein the packet is an internet protocol version 6 IPv6 packet, and the packet comprises an application-aware networking APN header comprising the identifier of the application; or
the packet is an internet protocol version 4 IPv4 packet or an IPv6 packet, and the packet comprises a transmission control protocol TCP header comprising the identifier of the application.

10. The apparatus according to claim 8 or 9, wherein the management and control module is configured to:
determine a management and control policy of the packet based on the identifier of the application; and
forward or discard the packet according to the management and control policy.

11. The apparatus according to any one of claims 8 to 10, wherein the first device is a device on which the container is deployed, and the obtaining module is configured to:
obtain the identifier of the application; and
generate the packet based on the identifier of the application.

12. The apparatus according to claim 11, wherein the obtaining module is configured to:
obtain a correspondence between an identifier of the container and the identifier of the application; and
obtain the identifier of the application based on the identifier of the container and the correspondence.

13. The apparatus according to claim 12, wherein the obtaining module is configured to receive the correspondence from a management and control device, and the correspondence is generated by the management and control device based on the identifier of the container and the identifier of the application.

14. The apparatus according to any one of claims 8 to 10, wherein the first device is a device in a network that a device on which the container is deployed accesses, and the obtaining module is configured to receive the packet sent by the device on which the container is deployed.

15. A packet management and control apparatus, comprising a memory and a processor, wherein
the memory is configured to store a computer program; and
the processor is configured to execute the computer program stored in the memory, to enable the packet management and control apparatus to perform the method according to any one of claims 1 to 7.

16. A packet management and control system, wherein the packet management and control system comprises a device on which a container is deployed and a device in a network that the device on which the container is deployed accesses, and either of the device on which the container is deployed and the device in the network that the device on which the container is deployed accesses comprises the apparatus according to any one of claims 8 to 15.

17. A computer-readable storage medium, wherein the computer-readable storage medium stores a computer program, and when the computer program is executed, the method according to any one of claims 1 to 7 is implemented.

18. A computer program product, wherein the computer program product comprises a program or code, and when the program or the code is executed, the method according to any one of claims 1 to 7 is implemented.
